Europäisches Patentamt

European Patent Office

Office européen des brevets

(19)

(11) EP 0 946 294 B1

(12) FASCICULE DE BREVET EUROPEEN

(45) Date de publication et mention
de la délivrance du brevet:
**25.09.2002 Bulletin 2002/39**

(21) Numéro de dépôt: **97913277.6**

(22) Date de dépôt: **07.11.1997**

(51) Int Cl.7: **B01J 23/656**

(86) Numéro de dépôt international:
**PCT/FR97/02005**

(87) Numéro de publication internationale:
**WO 98/019791 (14.05.1998 Gazette 1998/19)**

(54) **CATALYSEUR COMPRENANT AU MOINS UN ELEMENT DU GROUPE VIIB ET SON UTILISATION EN HYDROTRAITEMENT**

HYDROBHANDLUNGSKATALYSATOR ENTHALTEND ZUMINDEST EIN METAL DER VIIB-GRUPPEUNDZUMINDEST EIN METAL DER VIIB-GRUPPE

CATALYST HAVING AT LEAST ONE ELEMENT OF GROUP VIIB AND ITS USE IN HYDRO-TREATING

(84) Etats contractants désignés:
**DE ES FR GB IT NL**

(30) Priorité: **07.11.1996 FR 9613573**

(43) Date de publication de la demande:
**06.10.1999 Bulletin 1999/40**

(73) Titulaire: **INSTITUT FRANCAIS DU PETROLE**
**92500 Rueil Malmaison (FR)**

(72) Inventeurs:
• **QUARTARARO, Juliette**
 **F-13011 Marseille (FR)**
• **MIGNARD, Samuel**
 **F-78400 Chatou (FR)**
• **KASZTELAN, Slavik**
 **F-92500 Rueil Malmaison (FR)**

(74) Mandataire: **Andréeff, François**
 **Département Brevets,**
 **Institut Français du Petrole,**
 **1 & 4 avenue de Bois-Préau**
 **92852 Rueil Malmaison (FR)**

(56) Documents cités:
**EP-A- 0 036 703**     **EP-A- 0 573 973**
**GB-A- 2 066 690**     **US-A- 4 018 667**

EP 0 946 294 B1

## EP 0 946 294 B1

**Description**

La présente invention concerne un catalyseur et un procédé pour la transformation des charges hydrocarbonées et en particulier l'hydrotraitement. Le catalyseur comprend au moins un métal du groupe VIIB [groupe 7 selon la nouvelle notation de la classification périodique des éléments (Handbook of Chemistry and Physics, 76ème édition, 1995-1996), c'est-à-dire le rhénium, le manganèse et le technétium, de préférence le rhénium et le manganèse, de manière encore plus préférée le rhénium, et au moins un métal hydro-déshydrogénant et au moins une matrice poreuse, généralement de type oxyde amorphe ou mal cristallisée. L'élément hydro-déshydrogénant est choisi parmi les métaux des groupes VIII non nobles et VIB, de préférence le molybdène et le tungstène. Le catalyseur contient également du phosphore, du bore ou du silicium et éventuellement au moins un élément du groupe VIIA (groupe 17), de préférence le fluor.

La présente invention concerne également l'utilisation du catalyseur pour la transformation de charges hydrocarbonées telles que les coupes pétrolières, les coupes issues du charbon etc... et plus particulièrement l'hydrotraitement qui englobe principalement les réactions d'hydrodéazotation, et/ou d'hydrodésulfuration, et/ou d'hydrodémétallisation, et/ou d'hydrodéoxygénation, et/ou d'hydrogénation-hydrodéaromatisation.

L'hydrotraitement prend une importance de plus en plus grande dans la pratique du raffinage avec la nécessité croissante de réduire la quantité de soufre, d'azote et d'aromatiques dans les coupes pétrolières. Ceci résulte principalement d'une part de l'importation de bruts de plus en plus riches en fractions lourdes, pauvres en hydrogène et riches en hétéroatomes, dont l'azote et le soufre, et d'autre part aux spécifications sur les teneurs en soufre et en aromatiques imposées dans les divers pays pour les carburants commerciaux.

Les procédés actuels d'hydrotraitement catalytique utilisent des catalyseurs capables de promouvoir les principales réactions utiles à la mise en valeur des coupes lourdes, en particulier l'hydrogénation des noyaux aromatiques (HAR), l'hydrodésulfuration (HDS), l'hydrodéazotation (HDN) et autres hydroéliminations. L'hydrotraitement est employé pour traiter des charges telles que les essences, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytiques. L'influence de cet hydrotraitement préalable sur le rendement global et la durée de vie du catalyseur de craquage et/ou d'hydrocraquage est d'autant plus important que l'on dispose de catalyseurs d'hydrotraitement plus actifs en hydrodéazotation, en hydrodésulfuration. Au moins une étape d'hydrotraitement est habituellement intégrée dans chacun des schémas connus de valorisation des coupes pétrolières lourdes.

Ces catalyseurs utilisés en hydrotraitement associent une matrice de grande surface (100 à 800 m$^2$.g$^{-1}$ généralement) présentant une acidité superficielle faible à forte et une fonction hydrogénante apportée par au moins un métal du groupe VIB de la classification périodique tel que chrome, molybdène ou tungstène et/ou au moins un métal non nobledu groupe VIII tel que fer, cobalt, nickel.

Un catalyseur contenant du molybdène ou du tungstène, du cobalt ou du nickel associés à du rhénium ou de l'iridium a déjà été employé pour l'hydrodésulfuration de gasoils, comme décrit dans le brevet EP-A-0.573.973. On a recherché à améliorer le catalyseur et le procédé d'hydrotraitement.

Le catalyseur objet de l'invention est défini dans la revendication 1.

Les métaux non nobles du groupe VIII sont le fer, le cobalt et le nickel, de préférence le cobalt et le nickel sont utilisés. Les métaux du groupe VIB utilisés sont avantageusement le molybdène et le tungstène. De préférence, au moins un métal du groupe VIII est associé au Mo ou W. Un élément additionnel choisi dans le groupe formé par P, B et Si, (c'est-à-dire du phosphore ou du bore ou du silicium). Eventuellement au moins un halogène (élément du group VIIA) est présent, de préférence le fluor.

Le phosphore, le bore ou le silicium sont de préférence déposés sur le support, par exemple par imprégnation, et ne sont alors pas introduits sous forme de matrice.

Le catalyseur selon l'invention est généralement sous forme supportée, c'est-à-dire qu'il comprend une matrice exerçant en particulier le rôle de support, il pourrait être sous forme massique, c'est-à-dire qu'il ne comprend pas de matrice.

Le catalyseur, notamment pour l'hydrotraitement, renferme généralement en % poids par rapport à la masse totale du catalyseur :

- 0,01 à 99,7 % et de préférence 0,01 à 95 % et de manière encore plus préférée 0,01 à 85 % d'une matrice généralement amorphe,
- 0,01 à 50%, de préférence 0,05 à 40% et de manière encore plus préférée 0,1 à 30% et généralement de 0,1 à 20 % d'au moins un métal du groupe VIIB, tel que le manganèse, le technétium ou le rhénium, de préférence le rhénium ou le manganèse, de manière encore plus préférée le rhénium,
- 0,01 à 50 % de métal (métaux) hydro-déshydrogénant du groupe VIII non noble et/ou du groupe VIB, et plus précisément si un métal (des métaux) du groupe VIII non noble est présent, sa teneur est de 0,01 à 20%, de préférence 0,05 à 15% et de manière encore plus préférée 0,1 à 12%, et si un métal (des métaux) du groupe VIB est présent, sa teneur est de 0,01 à 30%, de préférence 0 ou 0,01 à 25% et de manière encore plus préférée 0,01 à 20%,

- 0,01 à 20%, de préférence 0,01 à 15% d'un élément choisi dans le groupe formé par les éléments Si, P, et B, (Si ou P ou B) et de préférence du phosphore ou du bore.

- 0 à 15%, de préférence 0 à 10% d'au moins un halogène c'est-à-dire un élément choisi dans le groupe VIIA, de préférence le fluor.

Les catalyseurs supportés de la présente invention peuvent être préparés par toute méthode bien connue de l'homme du métier.

De façon générale, le procédé préféré de préparation du catalyseur de la présente invention comprend au moins les étapes suivantes :

a) on forme une solution qui renferme au moins les composés suivants : un solvant, au moins une source d'un élément du groupe VIIB, au moins une source d'un élément du groupe VIII, et/ou au moins une source d'un élément du groupe VIB, au moins une source d'un élément choisi dans le groupe formé par les éléments : P, B, et Si, éventuellement une source d'un élément choisi parmi les halogènes

b) on mouille ou on imprègne le support (la matrice) par ladite solution et on maintient ledit mélange à une température comprise entre la température ambiante et 80°C pendant plusieurs heures,

c) on sèche le solide humide obtenu à l'étape b) à une température comprise entre 80 et 150°C, généralement dans un four, et

d) on calcine le solide sec obtenu à l'étape c) à une température supérieure à 150°C, généralement sous air.

Le mélange réalisé à l'étape a) ci-dessus peut être réalisé de manière simultanée ou successive, l'ordre important peu, dans le même espace physique ou séparément.

Il est possible de procéder plusieurs fois à chacune des étapes a) à d) précédentes, séparément ou en association avec au moins une autre des étapes a) à d) précédentes ainsi qu'il est connu de l'homme du métier. Par exemple, il est possible de procéder au moins deux fois à la succession d'étapes b), c) et d).

Ainsi, par exemple dans le cas préféré où le métal du groupe VIIB est le rhénium et où le métal du groupe VIII est le nickel, il est possible d'imprégner la matrice, par exemple de l'alumine, par du perrhénate d'ammonium, de procéder à un séchage à 120°C, puis d'imprégner par du nitrate de nickel, de procéder à un séchage à 120°C, et de procéder à une calcination par exemple et de façon préférée par l'air sec dans un réacteur à lit traversé à pression atmosphérique, par exemple à 500°C pendant 2 heures.

Il est encore possible de procéder à la synthèse du catalyseur à partir de solides comprenant l'élément du groupe VIIB et/ou l'élément du groupe VIII, lesdits solides étant obtenus respectivement à partir des sels de l'élément du groupe VIIB et des sels de l'élément du groupe VIII, lesdites synthèses étant réalisées simultanément ou successivement, l'ordre important peu, dans le même espace physique ou séparément; puis de procéder au mélange mécanique des dits solides avec la matrice, et enfin, après une mise en forme éventuelle, de procéder à la calcination dudit mélange mécanique de façon à obtenir le catalyseur selon l'invention.

Il est aussi possible de réaliser le mélange de poudres comprenant la source de l'élément du groupe VIIB, la source de l'élément du groupe VIII, éventuellement de l'eau, la source de l'élément choisi parmi, P, B et Si, et éventuellement la source de l'élément du groupe VIIA et d'imprégner la matrice.

La matrice peut être préalablement mise en forme et calcinée avant imprégnation. La mise en forme peut être réalisée par exemple par extrusion, par pastillage, par la méthode de la goutte d'huile (oil-drop), par granulation au plateau tournant ou par toute autre méthode bien connue de l'homme du métier.

La matrice préformée est alors éventuellement calcinée sous air, usuellement à une température d'au moins 300°C, couramment d'environ 350 à 1000°C.

L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

L'élément du groupe VIIB et/ou l'élément du groupe VIII, de même que l'élément du groupe VIB (Mo, W), de même que l'élément choisi dans le groupe formé par P, B et Si et l'élément choisi dans le groupe VIIA peuvent être introduits dans le catalyseur à divers niveaux de la préparation et de diverses manières. Lesdits éléments peuvent par exemple être introduits en partie seulement ou en totalité au moment du malaxage de la matrice poreuse.

L'élément du groupe VIII, l'élément du groupe VIIB de même que l'élément choisi dans le groupe formé par P, B, Si et l'élément choisi parmi les éléments du groupe VIIA, peuvent être introduits par exemple par une ou plusieurs opérations d'échange ionique sur la matrice calcinée, à l'aide d'une solution contenant au moins un sel précurseur de métal d'élément. Elle peut être introduite par au moins une opération d'imprégnation de la matrice mise en forme et calcinée, par une solution de précurseur d'au moins un élément par exemple un métal du groupe VIII, tout précurseur de métal du groupe VIII étant de préférence introduit en même temps ou après tout précurseur de métal du groupe VIIB et VIB.

Dans le cas où les métaux sont introduits en plusieurs imprégnations des sels précurseurs correspondants, une étape de séchage intermédiaire du catalyseur est généralement effectuée à une température généralement comprise entre 60 et 250°C.

La mise en forme du catalyseur supporté selon l'invention peut être une extrusion, un pastillage, la méthode de la goutte d'huile (oil-drop), une granulation au plateau tournant ou toute autre méthode bien connue de l'homme du métier.

Les sources d'élément du groupe VIIB qui peuvent être utilisées sont bien connues de l'homme du métier. Par exemple, on peut utiliser les oxydes, les hydroxydes, les polyoxométallates, les alkoxydes de formule $M(OR_1)_3$ où M est le métal et $R_1$ est un radical alkyle, les oxalates, les sels d'ammonium, les sels comme les fluorures, les chlorures, les bromures, les iodures, les oxyfluorures, les oxychlorures, les oxybromures, les oxyiodures, les phosphates, les complexes carbonyles, les nitrates, les oxynitrates, les complexes cyclopentadiènyles, les thiométallates, les carboxylates. On utilise de préférence les sels d'ammonium, les nitrates et les chlorures.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phophomolybdique, l'acide phosphotungstique et leurs sels, l'acide silicomolybdique, l'acide silicotungstique et leurs sels, les acétylacétonates, les xanthates, les fluorures, les chlorures, les bromures, les iodures, les oxyfluorures, les oxychlorures, les oxybromures, les oxyiodures, les complexes carbonyles, les thiomolybdates, les thiophosphates, les acétates, les xanthates et thioxanthates, les dithiophosphates, les dithiocarbamates et dithiophosphinates, les carboxylates. On utilise de préférence les oxydes et les sels d'ammonium tels que le molybdate d'ammonium, l'heptamolybdate d'ammonium et le tungstate d'ammonium Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

La source de phosphore préférée est l'acide orthophosphorique $H_3PO_4$, mais ses sels et esters comme les phosphates alcalins, les phosphates d'ammonium. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si$(OEt)_4$, les siloxanes, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool.

La source de bore peut être l'acide borique, de préférence l'acide orthoborique $H_3BO_3$, le biborate ou le pentaborate d'ammonium, l'oxyde de bore, les esters boriques de formules $B(OR)_3$ et $HB(OR)_2$ dans lesquels R est un reste hydrocarboné ayant habituellement de 1 à 50 atomes de carbone et pouvant comporter des hétéroatomes dans la chaîne ou comme substituant sur la chaîne. A titre d'exemple de restes hydrocarbonés on peut citer les radicaux méthyle, éthyle, propyles, butyles, pentyles, heptyles, et octyles. Les groupes R dans les formules ci-avant peuvent être identiques ou différents des autres. Le bore peut être introduit par exemple par une solution d'acide borique dans un mélange eau/alcool.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les anions chlorures peuvent être introduits sous la forme d'acide chlorhydrique, ou de ces sels. Ces sels sont formés avec des métaux alcalins, l'ammonium ou un composé organique. Dans ce dernier cas, le sel est avantageusement formé dans le mélange réactionnel par réaction entre le composé organique et l'acide chlorhydrique.

Le catalyseur renferme un élément du groupe VIIB tel que le technétium, le manganèse et le rhénium et un élément du groupe VIII tel que le fer, le cobalt, le nickel. Parmi les métaux du groupe VIIB on préfère employer le rhénium et parmi les métaux du groupe VIII on préfère employer le cobalt, le nickel. D'une manière avantageuse on utilise les associations de métaux suivantes : nickel-rhénium, cobalt-rhénium, fer-rhénium, ou nickel-cobalt-rhénium.

Le catalyseur peut renfermer un élément du groupe VIB tel que chrome, le molybdène, le tungstène. Parmi les métaux du groupe VIB on préfère employer le molybdène ou le tungstène. D'une manière avantageuse on utilise les associations de métaux suivantes : nickel-rhénium-molybdène, cobalt-rhénium-molybdène, fer-rhénium-molybdène, nickel-rhénium-tungstène, cobalt-rhénium-tungstène, fer-rhénium-tungstène, les associations préférées étant : nickel-rhénium-molybdène, cobalt-rhénium-molybdène. Il est également possible d'utiliser des associations de quatre métaux par exemple nickel-cobalt-rhénium-molybdène.

L'imprégnation du métal du groupe VIIB ou éventuellement du métal du groupe VIB peut être facilitée par ajout d'acide phosphorique dans la solution du métal du groupe VIIB ou éventuellement du métal du groupe VIB, ce qui permet d'introduire aussi le phosphore de façon à promouvoir l'activité catalytique. D'autres composés du phosphore peuvent être utilisés comme il est bien connu de l'homme du métier.

Le catalyseur renferme donc également au moins une matrice minérale poreuse habituellement amorphe ou mal cristallisée. Cette matrice est habituellement choisie dans le groupe formé par l'alumine, la silice, les silice-alumines, la magnésie, l'argile, l'oxyde de titane ou l'oxyde de zirconium, l'oxyde de bore, les aluminates, et par exemple les aluminates de magnésium, de calcium, de baryum, de manganèse, de fer, de cobalt, de nickel, de cuivre et de zinc, les aluminates mixtes et par exemple ceux contenant au moins deux des métaux cités ci dessus. On préfère utiliser des matrices contenant de l'alumine, sous toutes ces formes connues de l'homme du métier, par exemple l'alumine gamma.

Les catalyseurs obtenus par la présente invention sont utilisés en général sous la forme d'extrudés cylindriques ou polylobés. Ils présentent généralement une surface spécifique mesurée par adsorption d'azote selon la méthode BET comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

Les catalyseurs selon la présente invention sont utilisés pour la transformation des hydrocarbures, en particulier pour l'hydrotraitement de charges hydrocarbonées telles que les coupes pétrolières, les coupes issues du charbon, etc...

L'invention concerne également un procédé d'hydrotraiternent de charges hydrocarbonées avec le catalyseur ci-dessus décrit.

Un catalyseur préféré pour l'hydrotraitement contient au moins un métal du groupe VIII non noble, au moins un métal du groupe VIB, au moins un métal du groupe VIIB et un élément choisi dans le groupe formé par le phosphore, le bore, ou le silicium.

Les charges employées dans le procédé sont généralement choisies dans le groupe formé par les essences, les gazoles, les gazoles sous vide, les résidus désasphaltés ou non, les huiles paraffiniques, les cires et paraffines. Elles contiennent généralement au moins un hétéroatome tel que soufre, oxygène ou azote et éventuellement au moins un métal.

Les catalyseurs de la présente invention peuvent être aussi avantageusement utilisés lors du prétraitement des charges de craquage catalytiques et en première étape d'un hydrocraquage ou d'une hydroconversion douce. Ils sont alors usuellement employés en association avec un catalyseur acide, zéolithique ou non zéolithique, pour la deuxième étape du traitement.

Les conditions de l'hydrotraitement telles que température, pression, taux de recyclage d'hydrogène, vitesse volumique horaire, pourront être très variables en fonction de la nature de la charge, de la qualité des produits désirés et des installations dont dispose le raffineur. Elles sont bien connues de l'homme du métier.

La température est en général supérieure à 200°C et souvent comprise entre 250°C et 480°C. La pression est en général supérieure à 0,05 MPa et souvent supérieure à 1 MPa, allant de façon large jusqu'à 30 MPa. La présence d'hydrogène est en général nécessaire avec un taux de recyclage d'hydrogène généralement d'au moins 50 et souvent compris entre 80 et 5000 litres d'hydrogène par litre de charge. La vitesse volumique horaire est comprise en général entre 0,1 et 20 volume de charge par volume de catalyseur et par heure.

Dans le cas d'un hydrotraitement avant hydrocraquage, avantageusement la température sera comprise entre 350-430°C, la pression entre 5-20 MPa, la vitesse spatiale entre 0,1-5h$^{-1}$ et le rapport volumique H2/hydrocarbure entre 150 et 2000. Ces conditions sont particulièrement intéressantes lorsque l'hydrocraquage est effectué sur un catalyseur zéolitique.

Les catalyseurs selon l'invention sont de préférence (et en particulier pour l'hydrotraitement) soumis à un traitement de sulfuration permettant de transformer, au moins en partie, les espèces métalliques en sulfures avant d'effectuer l'hydrotraiternent, et généralement donc avant leur mise en contact avec la charge à traiter. Ce traitement d'activation par sulfuration peut être effectué par toute méthode connue de l'homme du métier.

Une méthode de sulfuration classique consiste à chauffer le mélange de solides sous flux d'un mélange d'hydrogène et d'hydrogène sulfuré ou sous flux d'un mélange d'azote et d'hydrogène sulfuré à une température comprise entre 150 et 800°C, de préférence entre 250 et 600°C, généralement dans une zone réactionnelle à lit traversé.

Les résultats qui importent au raffineur sont l'activité en HDS et en HDN. Les objectifs fixés doivent être réalisés dans des conditions compatibles avec la réalité économique.

Les exemples suivants illustrent la présente invention sans toutefois en limiter la portée.

Exemple 1

Préparation du support alumine entrant dans la composition des catalyseurs

Nous avons fabriqué une matrice à base d'alumine en grande quantité de façon à pouvoir préparer les catalyseurs décrits ci-après à partir de la même matrice mise en forme. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 243 $m^2/g$, un volume poreux de 0,61 $cm^3/g$ et une distribution en taille de pore monomodale centrée sur 100 Å (1 Å = $10^{-10}$ m). L'analyse de la matrice par la diffraction des rayons X révèle que celle ci est composée uniquement d'alumine gamma cubique de faible cristallinité.

Exemple 2

Catalyseur Mo supporté C1

Nous avons ajouté du molybdène sur le support extrudé de l'exemple 1 par imprégnation à sec en milieu aqueux. Le sel de molybdène est l'heptamolybdate d'ammonium $Mo_7O_{24}(NH_4)_6.4H_2O$. Après imprégnation à sec, les extrudés sont séchés une nuit à 120°C puis calciné à 500°C pendant deux heures sous air sec. La teneur finale en trioxyde de molybdène est de 3,2% poids ce qui correspond à 0,022 mole de l'élément molybdène pour 100 g de catalyseur fini.

Exemple 3

Catalyseur Re supporté C2

Nous avons ajouté du rhénium sur le support extrudé de l'exemple 1 par imprégnation à sec d'une solution de perrhénate d'ammonium $NH_4ReO_4$ dans l'eau. Après imprégnation à sec, les extrudés sont séchés une nuit à 120°C et ensuite calciné à 500°C pendant 2 heures sous air sec. Le catalyseur JQ2 est préparé avec une teneur finale en trioxyde de rhénium de 12,8% poids ce qui correspond à 0,06 mole de l'élément rhénium pour 100 g de catalyseur fini.

Exemple 4

Catalyseur Ni supporté C3

Nous avons fabriqué un catalyseur C3 de type nickel déposé sur alumine par imprégnation du support alumine de l'exemple 1 par une solution de le nitrate de nickel $Ni(NO_3)_2.6H_2O$. Après séchage et calcination dans les même conditions que les exemples précédents, la teneur finale en nickel est de 2,6% poids ce qui correspond à 0,044 mole de l'élément nickel pour 100 g de catalyseur fini.

Exemple 5

Catalyseur [Ni+Re] supporté C4

Un catalyseur C4 contenant du nickel et du rhénium avec une proportion atomique r=Ni/(Ni+Re) égale à 0,44 a été ensuite préparé. Les deux métaux sont introduits par imprégnation à sec du support alumine de l'exemple 1 en utilisant le perrhénate d'ammonium $NH_4ReO_4$ et le nitrate de nickel $Ni(NO_3)_2.6H_2O$ comme précurseurs. Le perrhénate d'ammonium est imprégné en premier puis l'échantillon est séché une nuit à 120°C et calciné à 350°C pendant deux heures. On imprègne ensuite le nitrate de nickel, on sèche une nuit à 120°C et on calcine à 500°C pendant deux heures sous air sec. Les teneurs pondérales en oxyde du catalyseur obtenu sont 12,8% de trioxyde Re et 2,6% d'oxyde de Ni soit respectivement à 0,06 et 0,044 mole des éléments rhénium et nickel pour 100 g de catalyseur fini.

## Exemple 6

### Catalyseur [Ni+Re+Mo] supporté C5

Nous avons pris une partie du catalyseur C4 dont la fabrication est décrite dans l'exemple 5 et nous y avons rajouté du molybdène par imprégnation à sec en milieu aqueux en utilisant l'heptamolybdate d'ammonium $Mo_7O_{24}$ $(NH_4)_6.4H_2O$ comme précurseur. Après imprégnation à sec, les extrudés sont séchés une nuit à 120°C et calciné à 500°C pendant deux heures sous air sec. On obtient le catalyseur C5 dont les teneurs pondérales finales respectives en trioxyde de rhénium, oxyde de nickel et trioxyde de molybdène sont de 12,8%, 2,6% et 3,2% ce qui correspond respectivement à 0,06, 0,044 et 0,022 moles des éléments rhénium, nickel et molybdène pour 100 g de catalyseur fini.

## Exemple 7

### Catalyseur [Ni+Re+P] supporté C6

Nous avons pris une partie du catalyseur C4 dont la fabrication est décrite dans l'exemple 5 et nous y avons ajouté du phosphore par imprégnation à sec en milieu aqueux utilisant de l'acide phosphorique H3 PO4.

Après imprégnation à sec, les extrudés sont séchés une nuit à 120°C et calcinés à 500°C pendant deux heures sous air sec. On obtient le catalyseur C6 dont les teneurs pondérales finales en oxydes de rhénium, de nickel et de phosphore sont respectivement de 10,54 % poids de Re03, 2,1 % de NiO et 4,95 % poids de P2O5.

## Exemple 8

### Catalyseur [Ni+Re+Mo+P] supporté C7

Nous avons pris une partie du catalyseur C4 dont la fabrication est décrite dans l'exemple 5 et nous y avons ajouté du molybdène et du phosphore par imprégnation à sec en milieux aqueux en utilisant l'heptamolybdate d'ammonium $Mo_7O_{24}(NH_4)_6.4H_2O$ et $H_3PO_4$. Après l'imprégnation à sec, les extrudés sont séchés une nuit à 120°C et calcinés à 500°C pendant deux heures sous air sec. On obtient le catalyseur C7 dont les teneurs pondérales finales respectives en trioxyde de rhénium, oxyde de nickel, trioxyde de molybdène et pentoxyde de diphosphore sont de 12.8 %, 2,6 %, 3,2 % et 5,8 % ce qui correspond respectivement à 0,06, 0,044, 0,022 et 0,082 moles en éléments rhénium, nickel molybdène et phosphore pour 100g de catalyseur fini.

## Exemple 9

### Catalyseur Mn supporté C8

Nous avons ajouté du manganèse sur le support extrudé de l'exemple 1 par imprégnation à sec d'une solution de nitrate de manganèse $Mn(NO_3)_2.4H_2O$ dans l'eau. Après imprégnation à sec, les extrudés sont séchés une nuit à 120°C et calciné sous air sec pendant deux heures. Le catalyseur C8 est préparé avec une teneur finale en dioxyde de manganèse de 5,1% poids ce qui correspond à 0,06 mole de l'élément manganèse pour 100 g de catalyseur fini.

## Exemple 10

### Catalyseur [Ni+Mn] supporté C9

Un catalyseur C9 contenant du nickel et du manganèse avec une proportion atomique r=Ni/(Ni+Mn) égale à 0,44 a été préparé. Les deux métaux sont introduits par imprégnation à sec successive du support alumine de l'exemple 1 en utilisant du nitrate de manganèse $Mn(NO_3)_2.4H_2O$ et le nitrate de nickel $Ni(NO_3)_2.6H_2O$ comme précurseurs. Après chaque imprégnation à sec, les extrudés sont séchés une nuit à 120°C. L'échantillon subit une calcination finale à 500°C pendant 2 heures sous air sec. Le catalyseur C9 est préparé avec une teneur finale en dioxyde de manganèse de 5,1% poids et une teneur en oxyde de nickel de 2,6% poids. La teneur finale en élément nickel et en élément manganèse déposé sur l'alumine de l'exemple 1 est de 0,06 mole de de Mn et 0,044 mole de Ni pour 100 g de catalyseur fini.

Exemple 11

Catalyseur [Ni+Mn+Mo] supporté C10

Nous avons pris une partie du catalyseur C10 dont la fabrication vient d'être décrite et nous y avons rajouté du molybdène par imprégnation à sec en milieu aqueux en utilisant le $Mo_7O_{24}(NH_4)_6.4H_2O$ comme précurseur. Après imprégnation à sec, les extrudés sont séchés une nuit à 120°C et calciné deux heures à 500°C sous air sec. On obtient le catalyseur C10 dont les teneurs pondérales finales respectives en dioxyde de manganèse, oxyde de nickel et trioxyde de molybdène sont de 5,05%, 2,5% et 3,2% ce qui correspond respectivement à 0,06, 0,044 et 0,022 moles des éléments manganèse, nickel et molybdène pour 100 g de catalyseur fini.

Exemple 12

Catalyseur [Ni+Mn+Mo+P] supporté C11

Nous avons pris une partie du catalyseur C9 dont la fabrication est décrite dans l'exemple 10 et nous y avons ajouté du molybdène et du phosphore par imprégnation à sec en milieux aqueux en utilisant l'heptamolybdate d'ammonium $Mo_7O_{24}(NH_4)_6.4H_2O$ et $H_3PO_4$. Après l'imprégnation à sec, les extrudés sont séchés une nuit à 120°C et calcinés à 500°C pendant deux heures sous air sec. On obtient le catalyseur C11 dont les teneurs pondérales sont de 4,3 % poids de MnO2, 2,2 % poids de NiO, 3,4 % poids de MO3 et 5,1 % poids de P2O5.

| TABLEAU SYNTHETIQUE DES CATALYSEURS DES EXEMPLES ||
| Référence | Catalyseur |
| --- | --- |
| C1 | Mo/alumine |
| C2 | Re/alumine |
| C3 | Ni/alumine |
| C4 | (Ni+Re)/alumine |
| C5 | (Ni+Re+Mo)/alumine |
| C6 | (Ni+Re+P)/alumine |
| C7 | (Ni+Re+Mo+P)/alumine |
| C8 | Mn/alumine |
| C9 | (Ni+Mn)/alumine |
| C10 | (Ni+Mn+Mo)/alumine |
| C11 | (Ni+Mn+Mo+P)/alumine |
| C12 | (Mo+Re+P)/alumine |

Exemple 14

Tests d'hydrodésulfuration de gazole

Les catalyseurs supportés précédemment décrits ont également été comparés en test d'hydrodésulfuration de gazole dont les principales caractéristiques sont données dans le tableau suivant :

| | |
| --- | --- |
| Densité à 15°C | 0,856 |
| Indice de Réfraction à 20°C | 1,4564 |
| Viscosité à 50°C | 3,72 cSt |
| Soufre | 1,57%poids |
| Distillation Simulée | |
| PI | 153°C |

(suite)

| | |
|---|---|
| 5% | 222°C |
| 50% | 315°C |
| 95% | 415°C |
| PF | 448°C |

Le test d'HDS de gazole est mené dans les conditions opératoires suivantes :

| | |
|---|---|
| Pression totale | 3 MPa |
| Volume de catalyseur | 40 cm$^3$ |
| Température | 340°C |
| Débit d'hydrogène | 20 l/h |
| Débit de charge | 80 cm$^3$/h |

Chacun des catalyseurs est sulfuré avant le test par un mélange gazole/DMDS jusqu'à 350°C. Les performances catalytiques des catalyseurs testés sont données dans le tableau 2 suivant. L'activité est calculée en considérant que la réaction est d'ordre 1,5. La relation liant l'activité et la conversion (%HDS) est alors la suivante :

$$\text{Activité} = \left[\frac{100}{(100 - \%HDS)}\right]^{0,5} - 1$$

Dans le tableau 2 les activités sont exprimées en activité relative, en posant que celle du catalyseur C2 est égale à 1.

TABLEAU 2

| Activité des catalyseurs en hydrodésulfuration de gazole | | |
|---|---|---|
| Catalyseur | Activité relative à JQ2 | Composition |
| C2 | 1 | Re/alumine |
| C4 | 2,2 | (Ni+Re)/alumine |
| C5 | 2,6 | (Ni+Re+Mo)/alumine |
| C6 | 2,7 | (Ni+Re+P)/alumine |
| C7 | 3,4 | (Ni+Re+Mo+P)/alumine |
| C9 | 0,8 | (Ni+Mn)/alumine |
| C10 | 1,1 | (Ni+Mn+Mo)/alumine |
| C11 | 1,4 | (Ni+Mn+Mo+P)/alumine |
| C12 | 2,7 | (Mo+Re+P)/alumine |

La performance en HDS de gazole des catalyseurs contenant à la fois le nickel, le rhénium et le phosphore est dans chaque cas supérieure à la performance des catalyseurs ne contenant pas de phosphore, ainsi que le montre la comparaison entre les catalyseurs C5 et C7 ou C4 et C6.
La présence simultanée de GVIII non noble, de GVI et de phosphore est bénéfique (comparaison C4 et C7 ou bien C9 et C11 ou encore C7-C12).

**Revendications**

1. Catalyseur constitué par :

- au moins une matrice,
- au moins un métal du groupe VIIB,
- au moins un métal non noble du groupe VIII,
- au moins un métal du groupe VIB choisi dans le groupe formé par le molybdène et le tungstène,
- éventuellement au moins un élément du groupe VIIA,
- un élément additionnel choisi dans le groupe formé par le phosphore, le bore ou le silicium.

2. Catalyseur selon la revendication 1 tel que l'élément du groupe VIIB est le rhénium ou le manganèse.

3. Catalyseur selon l'une des revendications 1 à 2 tel que l'élément du groupe VIIB est le rhénium.

4. Catalyseur selon l'une des revendications 1 à 3 tel que l'élément du groupe VIII est le cobalt ou le nickel.

5. Catalyseur selon l'une des revendications 1 à 4 tel que la matrice est choisie dans le groupe formé par l'alumine, la silice, la silice-alumine, l'argile, la magnésie, l'oxyde de titane, l'oxyde de zirconium, l'oxyde de bore, les aluminates.

6. Catalyseur selon la revendication 5 tel que ladite matrice est l'alumine.

7. Catalyseur selon l'une des revendications 1 à 6 tel que ledit élément du groupe VIIA est le fluor.

8. Catalyseur selon l'une des revendications 1 à 7 comprenant, en % poids par rapport à la masse totale de catalyseur :

   · 0,01 à 50 % d'au moins un élément du groupe VIIB,
   · 0,01 à 99,7 % d'au moins une matrice,
   · 0,01 à 50 % d'au moins un élément hydro-déshydrogénant,
   · 0,01 à 20 % d'un élément choisi parmi P, B ou Si,
   · 0 à 15 % d'au moins un élément du groupe VIIA.

9. Procédé d'hydrotraitement de charges hydrocarbonées en présence d'un catalyseur comprenant au moins une matrice, au moins un métal du groupe VIIB, et un élément choisi dans le groupe formé par le phosphore, le bore ou le silicium, et au moins un métal hydro-déshydrogénant choisi dans le groupe formé les métaux non nobles du groupe VIII, le molybdène et le tungstène.

10. Procédé selon la revendication 9 telle que la charge employée est choisie dans le groupe formé par les essences, les gazoles, les gazoles sous vide, les résidus désasphaltés ou non, les huiles paraffiniques, les cires et paraffines contenant au moins un hétéroatome tel que soufre, oxygène ou azote et éventuellement au moins un métal.

11. Procédé selon l'une des revendications 9 à 10 dans laquelle le catalyseur a été sulfuré.

12. Procédé selon l'une des revendications 9 à 11 dans lequel l'élément du groupe VII B et le rhénium ou le manganèse.

13. Procédé selon l'une des revendications 9 à 12 dans lequel la matrice est choisie dans le groupe formé par l'alumine, la silice, la silice-alumine, l'argile, la magnésie, l'oxyde de titane, l'oxyde de zirconium, l'oxyde de bore, les aluminates.

14. Procédé selon l'une des revendications 9 à 13 dans lequel le catalyseur contient également au moins un élément du groupe VII A.

15. Procédé selon la revendication 14 dans lequel l'élément est le fluor.

16. Procédé selon l'une des revendications 9 à 15 dans lequel le catalyseur comprend par rapport à la masse totale de catalyseur :

   · 0,01 à 50 % d'au moins un élément du groupe VIIB,
   · 0,01 à 99,7 % d'au moins une matrice,
   · 0,01 à 50 % d'au moins un élément hydro-déshydrogénant,

· 0,01 à 20 % d'un élément choisi parmi P, B ou Si,

· 0 à 15 % d'au moins un élément du groupe VIIA.

**17.** Procédé selon l'une des revendications 9 à 16 dans lequel le catalyseur est constitué par :

- au moins une matrice,
- au moins un métal du groupe VII B,
- au moins un métal non noble du groupe VIII,
- au moins un métal du groupe VIB choisi dans le groupe formé par le molybdène et le tungstène,
- éventuellement au moins un élément du groupe VII A,
- un élément additionnel choisi dans le groupe formé par le phosphore, le bore ou le silicium.

**Patentansprüche**

**1.** Katalysator gebildet aus:

- wenigstens einer Martix,

- wenigstens einem Metall der Gruppe VIIB,

- wenigstens einem nicht edlem Metall der Gruppe VIII,

- wenigstens einem Metall der Gruppe VIB, das aus der Gruppe gewählt ist, die gebildet wird durch Molybdän und Wolfram,

- gegebenenfalls wenigstens einem Element der Gruppe VIIA,

- einem zusätzlichen Element, das aus der Gruppe gewählt ist, die gebildet wird durch Phosphor, Bor oder Silizium.

**2.** Katalysator nach Anspruch 1, derart, dass das Element der Gruppe VIIB Rhenium oder Magnesium ist.

**3.** Katalysator nach Anspruch 1 bis 2, derart, dass das Element der Gruppe VIIB Rhenium ist.

**4.** Katalysator nach Anspruch 1 bis 3, derart, dass das Element der Gruppe VIII Kobalt oder Nickel ist.

**5.** Katalysator nach einem der Ansprüche 1 bis 4, derart, dass die Matrix aus der Gruppe gewählt ist, die gebildet wird durch Aluminiumoxid, Siliziumoxid, Silizium-Aluminiumoxid, Ton, Magnesiumoxid, Titanoxid, Zirkoniumoxid, Boroxid, die Aluminate.

**6.** Katalysator nach Anspruch 5, derart, dass die Matrix Aluminiumoxid ist.

**7.** Katalysator nach einem der Ansprüche 1 bis 6, derart, dass das Element der Gruppe VIIA Fluor ist.

**8.** Katalysator nach einem der Ansprüche 1 bis 7 umfassend in Gew.-% bezüglich der Gesamtmasse des Katalysators:

- 0,01 bis 50% wenigstens eines Elements der Gruppe VIIB,

- 0,01 bis 99,7% wenigstens einer Matrix,

- 0,01 bis 50% wenigstens eines hydrierenden-/dehydrierenden Elements,

- 0,01 bis 20% eines Elements, das unter P, B oder Si gewählt ist,

- 0,01 bis 15% wenigstens eines Elements der Gruppe VIIA.

**9.** Verfahren zum Hydrotreatment von Kohlenwasserstoffchargen in Gegenwart eines Katalysators, der wenigstens eine Martix, wenigstens ein Metall der Gruppe VIIB und ein Element, das aus den Gruppe gewählt ist, die gebildet wird durch Phosphor, Bor oder Silizium und wenigstens ein hydrierendes-/dehydrierendes Metall umfasst, das aus der Gruppe gewählt ist, die gebildet wird durch die nicht edlen Metalle der Gruppe VIII, Molybdän und Wolfram.

**10.** Verfahren nach Anspruch 9, derart, dass die eingesetzte Charge aus der Gruppe gewählt wird, die gebildet wird durch die Benzine, die Gasöle, die Vakuumgasöle, die ggf. deasphaltierten Rückstände, die paraffinischen Öle, die Wachse und Paraffine, die wenigstens ein Heteroatom wie Schwefel, Sauerstoff oder Stickstoff und ggf. wenigstens ein Metall enthalten.

**11.** Verfahren nach einem der Ansprüche 9 bis 10, bei dem der Katalysator geschwefelt worden ist.

**12.** Verfahren nach einem der Ansprüche 9 bis 11, bei dem das Element der Gruppe VIIB Rhenium oder Mangan ist.

**13.** Verfahren nach einem der Ansprüche 9 bis 12, bei dem die Matrix aus der Gruppe gewählt ist, die gebildet wird durch Aluminiumoxid, Siliziumoxid, Silizium-Aluminiumoxid, Ton, Magnesiumoxid, Titanoxid, Zirkoniumoxid, Boroxid, die Aluminate.

**14.** Verfahren nach einem der Ansprüche 9 bis 13, bei dem der Katalysator wenigstens ein Element der Gruppe VIIA enthält.

**15.** Verfahren nach Anspruch 14, derart, dass das Element Fluor ist.

**16.** Verfahren nach einem der Ansprüche 9 bis 15, bei dem der Katalysator bezüglich der Gesamtmasse des Katalysators umfasst:

- 0,01 bis 50% wenigstens eines Elements der Gruppe VIIB,
- 0,01 bis 99,7% wenigstens einer Matrix,
- 0,01 bis 50% wenigstens eines hydrierenden-/dehydrierenden Elements,
- 0,01 bis 20% eines Elements, das unter P, B oder Si gewählt ist,
- 0 bis 15% wenigstens eines Elements der Gruppe VIIA.

**17.** Verfahren nach einem der Ansprüche 9 bis 16, bei dem der Katalysator besteht aus:

- wenigstens einer Martix,
- wenigstens einem Metall der Gruppe VIIB,
- wenigstens einem nicht edlem Metall der Gruppe VIII,
- wenigstens einem Metall der Gruppe VIB, das aus der Gruppe gewählt ist, die gebildet wird durch Molybdän und Wolfram,
- gegebenenfalls wenigstens einem Element der Gruppe VIIA,
- einem zusätzlichen Element, das aus der Gruppe gewählt ist, die gebildet wird durch Phosphor, Bor oder Silizium.

**Claims**

**1.** A catalyst constituted by :

• at least one matrix,

- at least one group VIIB metal,
- at least one non-noble GVIII metal,
- at least one group VIB metal selected from the group formed by molybdenum and tungsten,
- optionally at least one GVII A element,
- an additional element selected from the group formed by P, B or Si.

2. A catalyst according to claim 1, in which the group VIIB element is rhenium or manganese.

3. A catalyst according to any one of claims 1 to 2 in which the group VIIB element is rhenium.

4. A catalyst according to any one of claims 1 to 3, in which the group VIII element is cobalt or nickel.

5. A catalyst according to any one of claims 1 to 4, in which the matrix is selected from the group formed by alumina, silica, silica-alumina, clay, magnesia, titanium oxide, zirconium oxide, boron oxide aluminates.

6. A catalyst according to claim 5, in which said matrix is alumina.

7. A catalyst according to claim 1 to 6, in which said group VIIA element is fluorine.

8. A catalyst according to any one of claims 1 to 7 comprising, in weight % with respect to the total catalyst mass:

- 0.01% to 50% of at least one group VIIB element;
- 0.01% to 99.7% of at least one matrix;
- 0.01% to 50% of at least one hydro-dehydrogenating;
- 0,01 to 20% of an element selected from P, B, and Si;
- 0 to 15% of at least one group VIIA element.

9. A process for hydrotraitment of hydrocarbonated feeds in the presence of a catalyst comprising at least one matrix, at least one group VIIB metal and an element selected from the group formed by phosphorus, boron or silicon at least one hydro-dehydrogenating metal selected from the group formed by non-noble group VIII metals, molybdenum and tungsten.

10. A process according to claim 9, in which the feed used is selected from the group formed by gasolines, gas oils, vacuum gas oils, residues which may or may not be deasphalted, paraffin oils, waxes and paraffins and it contains at least one heteroatom such as sulphur, oxygen or nitrogen and optionally at least one metal.

11. A process according to any one of claims 9 to 10 wherein the catalyst has been sulphurised.

12. A process according to any one of claims 9 to 11 wherein the group VIIB element is rhenium or manganese.

13. A process according to any one of claims 9 to 12 wherein the matrix is selected from the group formed by alumina, silica, silica-alumina, clay, magnesia, titanium oxide, zirconium oxide, boron oxide aluminates.

14. A process according to any one of claims 9 to 13 wherein the catalyst also contains at least one GVIIA element.

15. A process according to claim 14 wherein element is fluorine.

16. A process according to any one of claims 9 to 15 wherein the catalyst comprises

- 0.01% to 50% of at least one group VIIB element;
- 0.01% to 99.7% of at least one matrix;
- 0.01% to 50% of at least one hydro-dehydrogenating;
- 0,01 to 20% of an element selected from P, B, and Si;
- 0 to 15% of at least one group VIIA element.

17. A process according to any one of claims 9 to 16 wherein the catalyst is constituted by:

- at least one matrix,

- at least one group VIIB metal,
- at least one non-noble GVIII metal,
- at least one group VIB metal selected from the group formed by molybdenum and tungsten,
- optionally at least one GVII A element,
- an additional element selected from the group formed by P, B or Si.